# EUROPÄISCHE PATENTSCHRIFT

(11) **EP 0 470 217 B1**
(45) Veröffentlichungstag und Bekanntmachung des Hinweises auf die Patenterteilung: **24.05.1995**
(21) Anmeldenummer: 91903604.6
(22) Anmeldetag: 18.01.1991
(51) Int. Cl.: B60S 3/04, B25F 1/00

(54) **KOMBINATIONSWERKZEUG, INSBESONDERE FÜR KRAFTFAHRZEUGE**
COMBINATION TOOL, IN PARTICULAR FOR MOTOR VEHICLES
OUTIL COMBINE, PARTICULIEREMENT POUR VEHICULES A MOTEUR

(30) Priorität: 23.02.1990 DE 4005690
(43) Veröffentlichungstag der Anmeldung: 12.02.1992
(73) Patentinhaber: Klotz, Manfred, D-33100 Paderborn (DE)
(72) Erfinder: Klotz, Manfred, D-33100 Paderborn (DE)
(74) Vertreter: Hanewinkel, Lorenz, Dipl.-Phys.
(86) Internationale Anmeldenummer: EP9100083
(87) Internationale Veröffentlichungsnummer: WO9112981

(56) Entgegenhaltungen:
- EP-A- 134 558
- EP-A- 302 142
- WO-A-84/01917
- DE-U- 8 712 309
- GB-A- 2 182 550
- US-A- 2 147 769
- US-A- 4 605 175
- US-A- 4 719 660

## Beschreibung

Die Erfindung bezieht sich auf ein Kombinationswerkzeug, insbesondere für Kraftfahrzeuge, mit an einem Griff in einem Längenendbereich angeordnetem Nothammer und im anderen Längenendbereich vorgesehenen Gurtschneider.

Ein derartiges Kombinationswerkzeug ist aus der WO-A-8 401 917 bekannt geworden, welches einen Hammer und einen Gurtschneider aufweist und eine besondere Befestigung an einer Aufnahmeplatte zeigt.
Mit diesem Werkzeug sind nur zwei Funktionen, nämlich Einschlagen einer Fensterscheibe und Durchschneiden der Sicherheitsgurte möglich; das Werkzeug ist speziell für Unfallzwecke ausgelegt und kann keine anderen am Fahrzeug erforderlichen Funktionen durchführen. Der Griff des Werkzeuges ist lediglich als Stiel ausgebildet, so daß beim Einschlagen einer Fensterscheibe die Hand und die Finger des Benutzers ungeschützt sind und eine Verletzungsgefahr durch Glasscherben und -splitter gegeben ist.

Aufgabe der Erfindung ist es, ein Kombinationswerkzeug zu schaffen, das zusätzliche mehrere weitere verschiedene hilfreiche Funktionen erfüllen kann und dabei einfach und kostensparend aufgebaut ist, eine arbeitsgerechte und handgeschützte Handhabung hat und einen gesteigerten Gebrauchswert ergibt.

Die Aufgabe wird dadurch gelöst, daß der Griff einen dem Nothammer benachbart angeordneten Eisschaber und/oder eine Abziehleiste aufweist, im Griff dem Gurtschneider benachbart angeordnet ein Wischblattschärfer vorgesehen ist, und im Griff zwischen Nothammer und Gurtschneider sowie Wischblattschärfer ein Finger-Durchgriff ausgeformt ist, welcher an der dem Nothammer zugewandten Griffseite einen Schutzsteg für die Finger bildet.

Die in den Unteransprüchen 2 bis 27 aufgeführten Gestaltungsmerkmale stellen vorteilhafte Weiterbildungen der Aufgabenlösung dar.

Das Kombinationswerkzeug gemäß des Erfindung ermöglicht neben den bekannten Funktionen des Eisabschabens und des Wasserabziehens noch eine bzw. mehrere zusätzliche Funktionen und gestattet in seiner Gesamtheit die Durchführung von insgesamt sechs unterschiedlichen Funktionen.

Dieses Kombinationswerkzeug ist einfach und kostensparend aufgebaut, ermöglicht eine bequeme Handhabung und ergibt durch seinen vielseitigen Einsatz einen gesteigerten Gebrauchswert.

Die Vorteile des Kombinationswerkzeuges sind folgende:
1. An dem handgerecht gestalteten Griff sind in einem Längenendbereich der Eisschaber, die Abziehleiste, der Nothammer und ein Gleit- und Schmiermittelbehälter angeordnet und im anderen Längenendbereich ist ein Schneidteil und ein Schärfteil vorgesehen.
2. Der Eisschaber und die Feuchtigkeitsabziehleiste liegen in günstiger Weise gegenüber und nach außen divergierend, so daß sie einzeln gut zu benutzen sind.
3. Als Nothammer ist in dem Griff mit mehreren Anlagestellen sicher und dauerhaft haltbar ein Schlagbolzen festgelegt, der eine Schlagspitze oder eine ebene Schlagfläche zeigen kann und im Notfall zum Einschlagen der Kraftfahrzeugscheibe dient bzw. zu kleineren Reparaturen am Kraftfahrzeug benutzt werden kann.
4. Der Griff zeigt einen Fingerdurchgriff, der an der Seite des Nothammers von einem Schutzsteg überdeckt wird, so daß beim Benutzen des Nothammers Verletzungen an den Fingern durch Glassplitter oder andere Teile verhindert werden - dadurch ist das Kombinationswerkzeug bei seiner Benutzung zusätzlich unfallgeschützt ausgeführt.
5. In dem von einer eingeformten Kammer gebildeten und durch einen lösbaren Stopfen verschlossenen Behälter lassen sich verschiedene Gleit- oder Schmiermittel, insbesondere ein Talcum zum Einreiben der Gummidichtungen unterbringen, so daß dieses Gleit- oder Schmiermittel jederzeit griffbereit vorhanden ist und durch eine an einer Griffschale angeordnete, von einem verformbaren Balg gebildete Pumpe bequem und gezielt herausgeblasen werden kann.
6. Das Schneidteil zeigt eine günstig angeordnete Messerklinge und dient insbesondere zum Durchschneiden der Sicherheitsgurte im Auto im Notfall, es kann aber auch zum Durchschneiden von Bändern, Bindfäden, od. dgl., benutzt werden.
7. Mit dem Schärfteil ist dem Benutzer die Möglichkeit gegeben, seine abgenutzten Scheibenwischerblätter nachzuschleifen, so daß dadurch die Standzeit der Scheibenwischerblätter erhöht werden kann; dieses Schärfmittel ist abnehmbar, vorzugsweise durch Nut-Feder-Verbindung abschiebbar an beiden Griffschalen gehalten und somit als separates Teil zum Schärfzweck benutzbar.
8. Neben der Benutzung des Kombinationswerkzeuges im Kraftfahrzeugbereich läßt sich dieses auch im Haushalt zum Abziehen der Fensterscheiben von Feuchtigkeit, als Nothammer zum Einschlagen von Nägeln, od. dgl., zum Durchschneiden von Bindfäden, Papier, etc. und zum Schärfen von Messern, Scheren, od. dgl., benutzen.
9. Der Griff ist von zwei spiegelbildlich ausgebildeten, einteiligen Schalenhälften gebildet, die mit angeformten Verbindungsmitteln ausgestattet sind, sich einfach und kostengünstig herstellen und leicht mit den eingesetzten Einzelwerkzeugen zu einer Einheit verbinden lassen; die Verbindung beider Griffschalen erfolgt durch ineinandergreifende Clipverschlüsse und zusätzlich in einem Längenendbereich durch eine Hakenverbindung und im anderen Längenendbereich durch das aufgeschobene Schärfteil.
10. Der den Behälter mit dem Gleit- und/oder Schmiermittel lösbar verschließende Stopfen ist mit einer daran befestigten Düsennadel ausgestattet, die ein Reinigen und Einstellen der Spritzdüsen der Scheibenwaschanlage ermöglicht.
11. Der Griff kann weiterhin einen querliegenden Handgriff aufweisen, der ein Durchfassen und Übergreifen mit der Hand zur Benutzung ermöglicht.
12. Weiterhin läßt sich der Werkzeugkopf neben dem Eisschaber und/oder der Abziehleiste mit einem auswechselbaren unterschiedlich harte Bereiche aufweisenden Schwamm ausstatten, der ein Reinigen von Flächen mit festanhaftenden Schmutzteilen durch den harten Schwammbereich und ein Nachsäubern bzw. Abwischen der Flächen mit dem weichen Schwammbereich ermöglicht.

Auf den Zeichnungen sind Ausführungsbeispiele gemäß der Erfindung dargestellt, welche nachfolgend näher erläutert werden. Es zeigt:
- Fig. 1: eine Vorderansicht eines Kombinationswerkzeuges mit an/in einem Griff angeordneten Eisschaber, Feuchtigkeits-Abziehleiste, Nothammer, Talcumbehälter, Gurtschneider und Wischerblatt-Schärfteil,
- Fig. 2: eine Seitenansicht des Kombinationswerkzeuges von der rechten Seite gemäß Fig. 1 auf den Eisschaber, die Abziehleiste, den Talcumbehälter und den Gurtschneider gesehen,
- Fig. 3: eine Seitenansicht des Kombinationswerkzeuges von der linken Seite gemäß Fig. 1 auf den Eisschaber, die Abziehleiste, den Nothammer und das Schärfteil gesehen,
- Fig. 4: eine Stirnansicht des Schärfteiles in Pfeilrichtung X gemäß Figur 1 gesehen,
- Fig. 5 und 6: eine Innenansicht auf die beiden spiegelbildlich ausgeführten Hälften des Griffes,
- Fig. 7 und 8: eine Seitenansicht und Stirnansicht einer Messerklinge des Schneidteiles,
- Fig. 9: eine Seitenansicht des aus dem Griff gelösten Nothammerbolzen,
- Fig. 10: eine Seitenansicht im teilweisen Schnitt und in Explosionsdarstellung des Griffes, des Eisschabers und der Abziehleiste sowie eines den Eisschaber und die Abziehleiste am Griff fixierenden Halteprofiles,
- Fig. 11: eine Seitenansicht eines den Talcumbehälter verschließenden Stopfens mit Düsennadel,
- Fig. 12 bis 16: eine Vorderansicht, zwei Seitenansichten, eine Unteransicht und eine Draufsicht eines Kombinationswerkzeuges mit nur einer Abziehleiste oder einem Eisschaber,
- Fig. 17 bis 21: eine Vorderansicht, zwei Seitenansichten, eine Unteransicht und eine Draufsicht eines Kombinationswerkzeuges mit querliegendem Griff,
- Fig. 22: eine Seitenansicht des Kombinationswerkzeuges in weiterer Ausführung mit in dessen Kopf angeordnetem Eisschaber, Talcum-Austrittnut, Schärfteil und Abziehleiste,
- Fig. 23 und 24: eine Vorderansicht und eine Seitenansicht des Kombinationswerkzeuges mit zusätzlich zwischen Eisschaber und Abziehleiste angeordnetem Schwamm,
- Fig. 25 bis 27: Vorderansichten des Kombinationswerkzeuges nach Fig. 1 und 17 mit Anfaß-Darstellungen.
- Fig. 28: eine Vorderansicht des Kombinationswerkzeuges mit Pumpe und lösbarem Schärfteil,
- Fig. 29: eine Seitenansicht desselben Kombinationswerkzeuges,
- Fig. 30: einen Längsschnitt desselben Kombinationswerkzeuges mit Pumpe und die beiden Griffschalen lösbar zusammenhaltender Hakverbindung, Steckverbindung und Schärfteil.

Mit (1) ist ein Griff eines manuellen Kombinations-Werkzeuges, insbesondere für Kraftfahrzeuge, bezeichnet, an/in dem ein Eisschaber (2), eine Feuchtigkeits-Abziehleiste (3), ein Nothammer (4),ein Schneidteil (5), ein Schärfteil (6) und ein Behälter (7) für ein Gleit- und/oder Schmiermittel angeordnet sind, so daß dieses Werkzeug insgesamt sechs Funktionen erfüllt.

Der Griff (1) ist von einem langgestreckten Griffkörper gebildet, der in seinen beiden Längen-Endbereichen die einzelnen Werkzeuge (2 bis 7) aufweist und dazwischen einen ausgeformten länglichen und in Griff-Längsrichtung verlaufenden Finger-Durchgriff (8) besitzt.

Dieser Finger-Durchgriff (8) bildet an der dem Nothammer (4) benachbarten Griff-Längsseite einen Schutzsteg (9) für die Finger, so daß bei der Benutzung des Kombinationswerkzeuges als Hammer die Finger gegen Glassplitter od. dgl. bzw. gegen Auftreffen auf die Schlagfläche geschützt sind.

Weiterhin zeigt der Griff (1) auf der dem Schutzsteg (9) gegenüberliegenden Umfangsseite im Bereich des Finger-Durchgriffes (8) außenseitig eingeformte Griffrinnen (10) für die Finger, so daß im Finger-Durchgriff (8) das Kombinationswerkzeug von einer Hand bequem und sicher ergriffen und gehalten werden kann.

Das Kombinationswerkzeug zeigt in einem Längenendbereich des in Werkzeug-Längsrichtung verlaufenden Griffes (1) den Eisschaber (2), die Abziehleiste (3), den Nothammer (4) und den Behälter (7) und im gegenüberliegenden Längenendbereich das Schneidteil (5) und das Schärfteil (6).

Der Griff (1) ist aus zwei spiegelbildlich ausgeführten Griffschalen (-hälften) (11, 12)) gebildet, die mit am Außenrand und um den Finger-Durchgriff (8) umlaufenden Falzrändern (13) überlappend ineinandergreifen und durch innenseitig angeformte, von ineinandergreifenden Hülsen und Steckern gebildeten Clipverschlüssen (14) lösbar zusammengehalten sind; es können auch die beiden Griffschalen (11, 12) durch Schrauben oder durch Schrauben (14 a) und Clipverschlüsse (14) miteinander verbunden sein.

In einer endseitigen einen Werkzeugkopf bildenden Schalenverbreiterung (15) des Griffes (1) (beider Griffschalen (11, 12)) ist in Längsrichtung dieser Verbreiterung (15) zur Bildung des Nothammers (4) ein Schlagbolzen (16) aus Metall eingesetzt, der aus dem Griff (1) an der Seite herausragt, an der auch der Schutzsteg (9) verläuft.

Der Schlagbolzen (16) erstreckt sich mit seiner Längsrichtung rechtwinklig, vorzugsweise leicht stumpfwinklig zur Längsrichtung des Schurzsteges (9) und dabei in Richtung Eisschaber (2) und Abziehleiste (3) geneigt.

In den beiden Griffschalen (11, 12) ist eine Einsatzkammer (17) ausgeformt, in die der Schlagbolzen (16) formschlüssig und lagefixiert eingesetzt ist. Der Schlagbolzen (16) hat einen Kreis-Querschnitt und ist in Längsrichtung zylindrisch ausgeführt und entsprechend ist die Einsatzkammer (17) aus zwei Halbkreisrinnen gebildet.

Zum sicheren und langem Halt des Schlagbolzens (16) im Griffstück (1) und zum verteilten Auffangen der Schlagkräfte zeigt die Einsatzkammer (17) und der Schlagbolzen (16) mehrere Anlagestellen, die vom Boden (17a) der Kammer (17) und von zwei oder mehreren angeformten Rippen (17b) und von einem Stirnende (16a) und ausgesparten Ringnuten (16b) des Schlagbolzens (16) gebildet sind; der Schlagbolzen (16) liegt somit mit seiner Stirnfläche (16a) am Kammerboden (17a) an und die Rippen (17b) greifen in die Ringnuten (16b) des Schlagbolzens (16) ein.

Am aus dem Griff (1) herausragenden Ende zeigt der Schlagbolzen (16) eine Schlagspitze (16c); er kann jedoch auch mit einer planen Schlagfläche ausgestattet sein.

Weiterhin läßt sich die Einsatzkammer (17) mit den Rippen (17b) und der Schlagbolzen (16) mit seinen Ringnuten (16b) so formen, daß er in beiden Stellungen, d.h. einmal mit der Spitze (16c) außen und zum anderen mit der Spitze (16c) innenliegend in den Griff (1) wahlweise eingesetzt werden kann.

An den Kammerboden (17a) schließt sich koaxial eine weitere, in beide Griffschalen (11, 12) eingeformte Kammer an, die den Behälter (7) bildet. Diese Kammer (7) zeigt an der dem Schlagbolzen (16) gegenüberliegenden Griffseite eine Öffnung (7a), die durch einen Stopfen (18) verschlossen ist.

In diesem Behälter (7) können die verschiedensten Gleit- und/oder Schmiermittel, vorzugsweise Talcum, zum Einschmieren der Gummidichtungen des Kraftfahrzeuges oder Türschloßenteiser für das Kraftfahrzeug, untergebracht werden, so daß dem Benutzer stets ein derartiges Mittel zur Verfügung steht und er dieses nach Abnehmen des Stopfens (18) leicht aus dem Behälter (7) entnehmen kann.

Jede Griffschale (11, 12) zeigt an ihrer Verbreiterung (15) je einen angeformten, über die gesamte Verbreiterungslänge verlaufenden und schräg nach außen gerichteten Anlagesteg (19), wobei beide Anlagestege (19) im verbundenen Zustand der Griffschalen (11, 12) dem Griffstück (1) eine trapezförmige Rinne (27) geben, in die ein Halteprofil (20) zur lösbaren Festlegung des Eisschabers (2) und der Abziehleiste (3) eingreift, das durch mindestens eine in ein ausgeformtes Loch (21) der Griffschalen (11, 12) einfassende Schraube (22) lösbar am Griff (1) gehalten ist.

Der Eisschaber (2) ist von einer sich über die gesamte Länge des Anlagesteges (19) erstreckenden Metallplatte gebildet, die in einer Abstufung (25) am Haltesteg (19) anliegt und mit zwei Fixierlöcher (23) über angeformte Nocken (24) greift, so daß der metallische Eisschaber (2) lagefixiert zwischen Anlagesteg (19) und Halteprofil (20) festgelegt ist.

Die Abziehleiste (3) besteht aus einem sich über die gesamte Länge des Anlagesteges (19) erstreckenden, streifenförmigen Gummiprofil, das an einer Längskante eine Wulst (3a) aufweist, die in entsprechende Aussparungsrinnen (26) des Anlagesteges (19) und des Halteprofiles (20) zur lagefixierten Festlegung eingreift. Die Abziehleiste (3) liegt ebenfalls in einer Abstufung (25) des Anlagesteges (19).

Das Halteprofil (20) zeigt entsprechend der durch die Anlagestege (19) gebildeten Griffrinne (27) ein trapezförmiges Querschnittsprofil, welches in die Griffrinne (27) formschlüssig eingreift und den Eisschaber (2) und die Abziehleiste (3) nach dem Anziehen der Schraube (22) verspannt gegen die Anlagestege (19) drückt.

Der Eisschaber (2) und die Abziehleiste (3) ragen mit ihrer wirksamen Randkante (2a, 3b) aus den Anlagestegen (19) und dem Halteprofil (20) heraus. Das andere Längenende des Griffes (1) ist zu einem Haken (28) geformt, in dem das Schneidteil (5), insbesondere als Gurtschneider, und Schärfteil (6), insbesondere für Wischblätter, liegen.

Der Haken (28) erstreckt sich in Griffbreite und somit in Längsrichtung der gegenüberliegenden Verbreiterung (15) und die Hakennase (28a) steht an einer Längsseite, und zwar an der die Finger-Griffrinnen (10) zeigenden Griffsseite über den Griff (1) hinaus und bildet mit dem Griff (1) einen Einführschlitz (29), in den eine metallische Messerklinge (30) des Schneidteiles (5) hineinragt.

Diese Messerklinge (30) erstreckt in rechteckiger Klingenform sich mit ihrer Längsrichtung schräg zur Längsrichtung des Einführschlitzes (29), so daß eine den Schlitz (29) keilförmig verengende Schneidkante (30a) entsteht.

Die Messerklinge (30) wird zwischen den beiden Griffschalen (11,12) durch zwei Clipverschlüsse (14) festgelegt, die zwei Löcher (30b) der Messerklinge (30) durchfassen.

Die Messerklinge (30) kann auch von einer Rundklinge (Messerrad) oder einer Hakenklinge gebildet sein.

Das Schärfteil (6) liegt, dem Einführschlitz (29) angewandt, im Bogenbereich (28b) des Griffhakens (28) und verläuft schräg und ähnlich der Schrägstellung der Messerklinge (30).

Dieses Schärfteil (6) ist durch mehrere ausgesparte Abstufungen (31) und einem ausgesparten Schärfkeil (32) gebildet, wobei in beiden Griffschalen (11,12) gleiche Teile an Abstufungen (31) und ein Teil des Schärfkeiles (32) ausgespart ist.

Der Schärfkeil (32) liegt in der Mitte und die Abstufungen (31) schließen sich daran an und bilden das in der Breite sich erweiternde und nach außen offene, rinnenartige Schärfteil (6).

Die Oberfläche des Schärfkeiles (32) und der Abstufungen (31) läßt sich von einer Erodierung des Griffschalenwerkstoffes bilden oder mit einer rauhen, eine Schärfwirkung erzeugenden Beschichtung (33), wie Schmirgelschicht, Metallschicht, od. dgl., versehen.

Durch das stukturierte, in sich abgestufte Schärfteil (6) lassen sich verschieden breite Wischerblätter oder andere Gummi- oder Kunststoffteile nachschärfen bzw. nachschleifen.

Die beiden Griffschalen (11,12) sind jeweils einteilig aus Kunststoff oder Leichtmetall (Aluminiumguß) geformt.

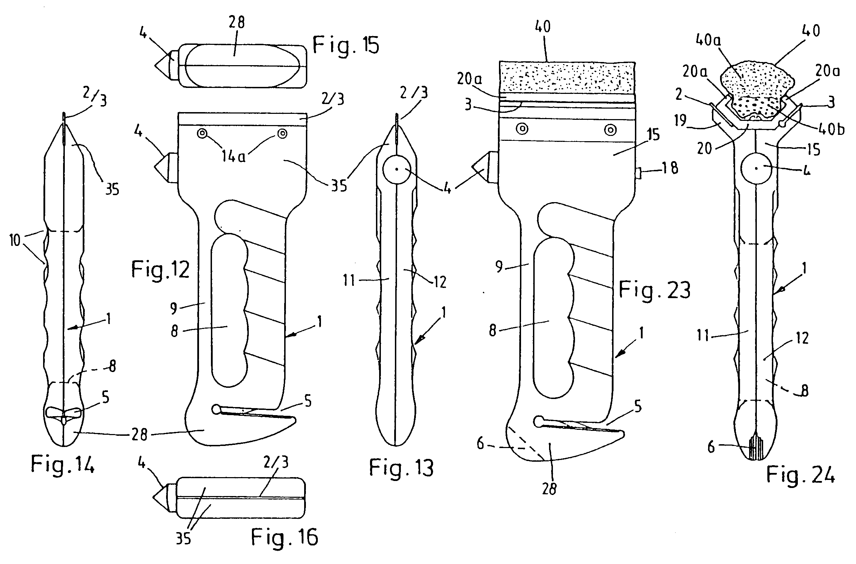

Gemäß Fig. 11 ist der Stopfen (18) zum Verschließen der Talcumkammer (7) mit einer Düsennadel (34) ausgestattet, die in den Kunststoffstopfen (18) eingelassen (eingespritzt) ist und an ihrem freien Längenende in der Spitze ausläuft. Mit dieser Düsennadel (34) lassen sich die Spritzdüsen der Scheibenwaschanlage reinigen und in ihrer Spritzstellung bequem einrichten, wobei der Stopfen (18) ein Griffstück ergibt.

Der Stopfen (18) wird in die Öffnung (7a) eingesteckt oder eingeschraubt.

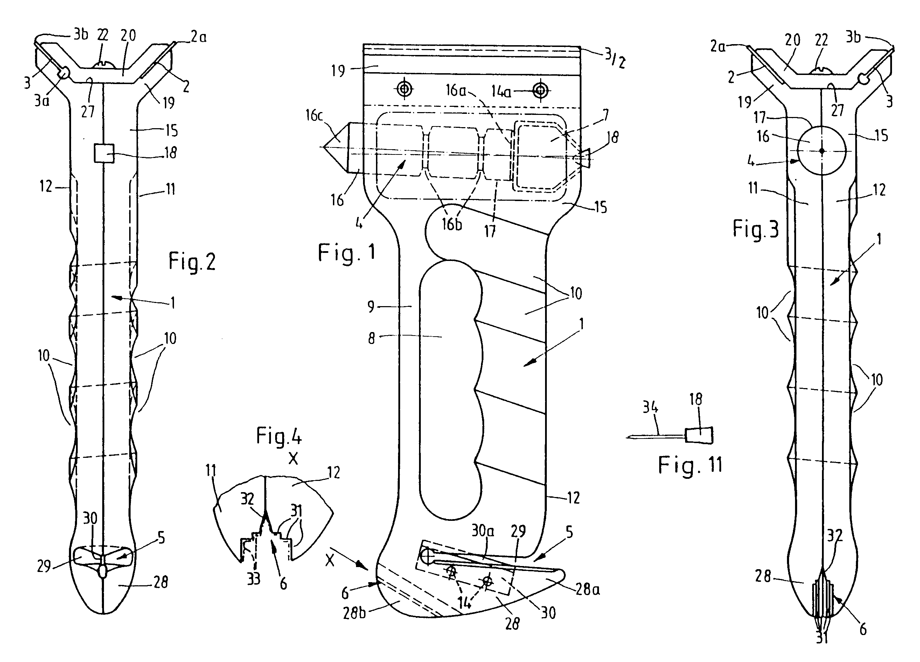

Die Fig. 12 bis 24 stellen Abwandlungen zu dem Kombinationswerkzeug nach Fig. 1 bis 11 dar, die nachfolgend im einzelnen erläutert werden, wobei für die gleichen Teile dieselben Bezugszahlen verwendet werden.

Das Kombinationswerkzeug nach Fig. 12 bis 16 ist in seinem verbreiterten Werkzeugkopf (35) entweder nur mit einer Abziehleiste (3) oder nur mit einem Eisschaber (2) ausgestattet. Dabei hat dieser Werkzeugkopf (35) die Form einer Finne, und die Abziehleiste (3) oder der Eisschaber (2) liegt im Stoß der beiden Schalenhälften (11, 12) und steht aus der Finnenspitze des Werkzeugkopfes (35) heraus.

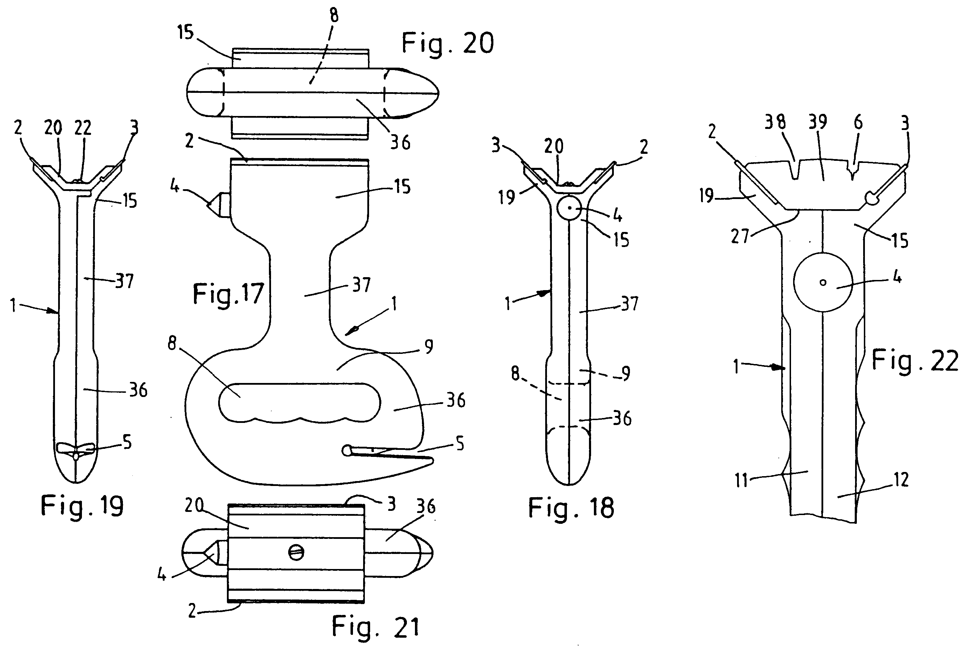

Das Kombinationswerkzeug nach Fig. 17 bis 21 ist mit einem Griff (1) ausgestattet, der einen querliegenden Handgriff (36) mit querverlaufendem Finger-Durchgriff (8) aufweist, an dessen Schutzsteg (9) über einem Verbindungsstück (37) der Werkzeugkopf (15) angeformt ist.

Dieser Handgriff (36) zeigt das Schneidteil (5) und ggfls. auch das Schärfteil (6), die sich dann entsprechend dem Werkzeug nach Fig. 1 gegenüberliegen. Der querliegende Handgriff (36) hat vorzugsweise eine ovale Grundform.

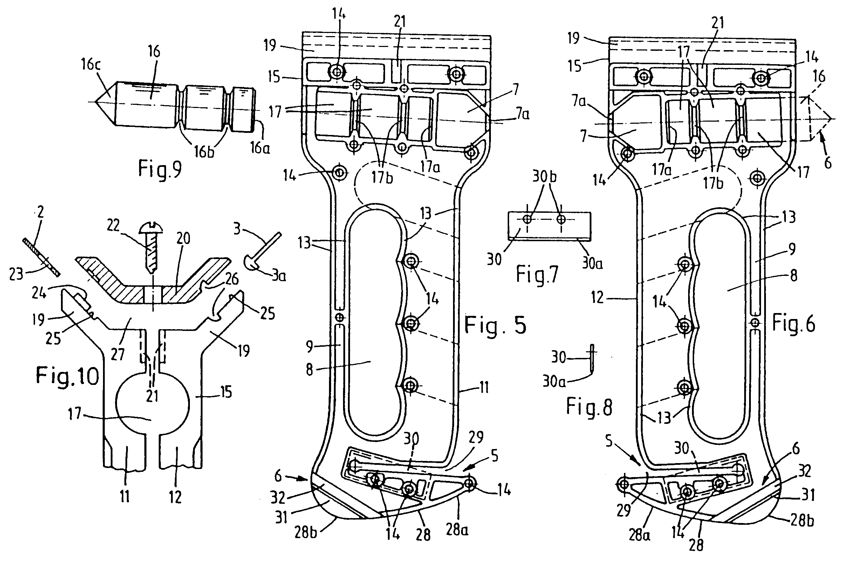

In Fig. 22 ist in dem Werkzeugkopf (15) zwischen dem Eisschaber (2) und der Abziehleiste (3) eine Austrittsnut (38) für Talcum und das Schärfteil (6) angeordnet. Hierbei ist das Halteprofil (20) gemäß Fig. 10 als trapezförmiges Einsatzstück (39) ausgebildet, das zwischen die Anlagestege (19) in die Rinne (27) zur Fixierung des Eisschabers (2) und der Abziehleiste (3) faßt und darin durch nicht dargestellte Befestigungsmittel, wie Schrauben, lösbar gehalten ist.

In diesem Einsatzstück (39) ist auch die Talcumkammer (7) (nicht dargestellt), die mit der Austrittsnut (38) in Verbindung steht, und ist das Schärfteil (6) ausgespart.
Die Talcumkammer (7) kann auch im Werkzeugkopf (15) ausgespart sein und steht dann über einem Durchgang mit der Nut (38) in Verbindung. Durch diese schlitzförmige, sich über die gesamte Breite des Einsatzstückes (39) in Längsrichtung des Eisschabers (2) erstreckende Nut (38) können Dichtungen am Kraftfahrzeug leicht mit Talcum bestrichen werden, da diese Nut (38) über die Dichtungen fast und beim Verschieben des Werkzeuges über die Dichtungen gleitet.

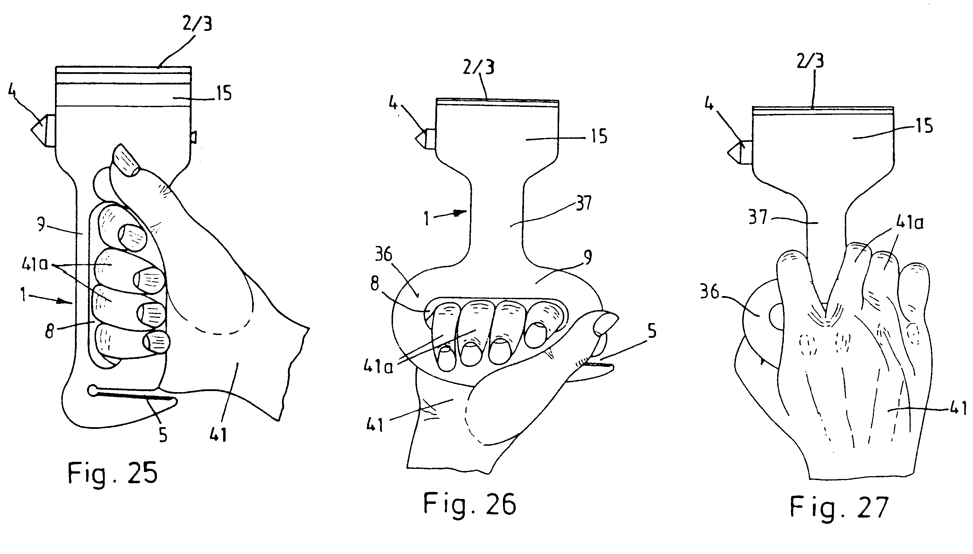

Fig. 23 und 24 zeigen das Kombinationswerkzeug gemäß Fig. 1, jedoch mit einem zusätzlichen Schwamm (40) im Werkzeugkopf (15) zwischen Eisschaber (2) und Abziehleiste (3).
Hierbei ist das Halteprofil (20) im Querschnitt C-förmig ausgebildet und die dabei entstandenen C-Enden (20 a) greifen zur Halterung in den Schwamm (40) ein.

Der Schwamm (40) besteht vorzugsweise aus einem weichen und einem härteren Schwammbereich (40a, 40b) und läßt sich je nach Bedarf (Arbeiten mit dem weichen Teil (40 a) und mit dem harten Teil (40 b) in das Halteprofil (20) einstecken, d.h. in seiner Lage wechseln.
Es besteht hierbei auch die Möglichkeit, im Kopf (15) neben dem einstückigen Schwamm (40) auch nur die Abziehleiste (3) oder nur den Eisschaber (2) einzusetzen.

Fig. 25 zeigt das Kombinationswerkzeug nach Fig. 1 bzw. 12 bzw. 23 in der von einer Hand (41) erfaßten Darstellung, wobei die Finger (41a) der Hand (41) durch den Durchgriff (8) fassen und in die Griffrinnen (10) eingreifen und vom Schutzsteg (9) geschützt überdeckt sind.

Die gleiche Anfassungsdarstellung ist bei dem Werkzeug nach Fig. 17 in der Fig. 26 gezeigt, die in den querliegenden Griff (36) eingreifen und beim Benutzen des Werkzeuges als Nothammer (4) diese Stellung einnehmen und durch den Griff (36) umlaufend geschützt sind. Zum Eisschaben oder Feuchtigkeitsabziehen kann die Hand (41) den Griff (36) mit den Fingern überfassen und den Steg (37) umfassen, wie in Fig. 27 dargestellt, so daß mit dieser Anfaßmöglichkeit ein bequemes Verschieben bzw. Ziehen des Werkzeuges über die zu reinigende Fläche geschaffen ist.

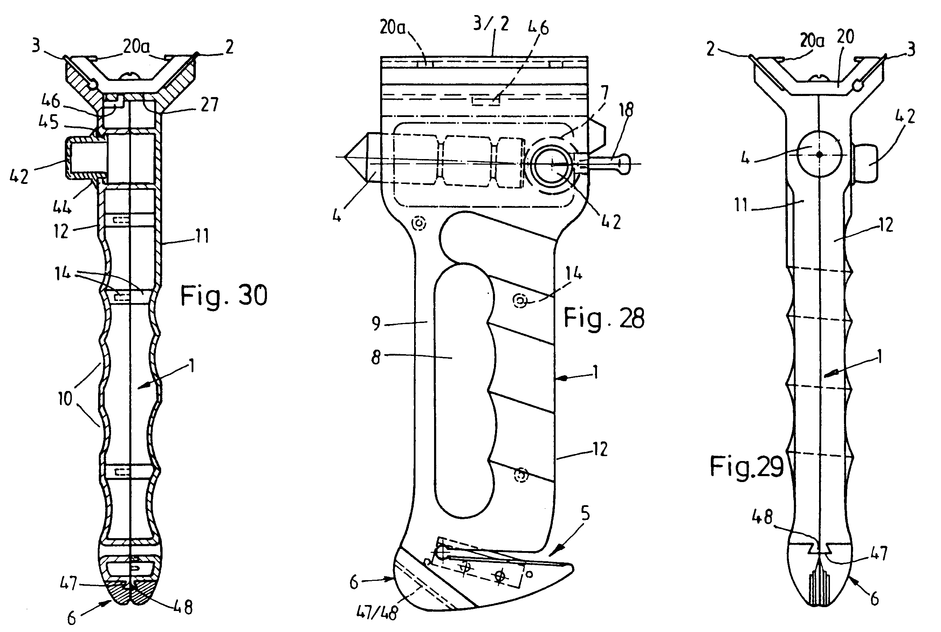

In Fig. 29 bis 30 ist das Kombinationswerkzeug an seinem Gleit- und/oder Schmiermittelbehälter (7) mit einer Pumpe (42) zum Herausblasen des Gleit- und/oder Schmiermittels aus der Behälteröffnung (7a) ausgestaltet.

Dieser Behälter (7) ist von zwei an den Griffschalen (11, 12) innenseitig angeformten Zylinderringen (43) gebildet, die mit ihrer offenen Stirnseite aneinanderstoßen und eine geschlossene zylindrische Kammer mit kreisförmigem Querschnitt bilden, von der die Öffnung (7a) abgeht.

Die Pumpe (42) ist von einem topfförmigen Balg aus elastischem und/oder flexiblem Material, vorzugsweise Gummi oder Kunststoff, gebildet.

Dieser Pumpenbalg (42) ist mit einem an seiner offenen Topfseite angeformten Rastrand (44) in einem Loch (45) des Behälters (7) an einer Griffschale (11) oder (12) befestigt.

Durch Druck von Hand (einem Finger) auf den Pumpenbalg (42) wird dieser verformt und durch den im Behälter (7) entstehenden Druck das Gleit- und/oder Schmiermittel aus der Öffnung (7a) bei abgenommenem Stopfen (18) herausgeblasen. Der Pumpenbalg (42) geht immer wieder in seine topfförmige Ausgangslage zurück.

Die beiden Schalenhälften (11, 12) sind neben den ineinandergreifenden buchsen- und zapfenförmigen Clipverschlüssen (14) noch zusätzlich durch eine Hakenverbindung und das lösbare Schärfteil (6) zusammengehalten.

Hierfür ist an einer Griffschale (11) oder (12) unterhalb der Griffrinne (27) mindestens ein Haken (46) angeformt, der von unten her in ein in der Griffrinne (27) der anderen Griffschale (12) oder (11) ausgenommenes Loch einhakt und somit die beiden Griffschalen (11, 12) in einem Längenendbereich zusammenhält.

Das Schärfteil (6) ist als abnehmbares Kunststoffteil ausgeführt, welches durch Nut-Feder-Verbindung (47, 48) an beiden Griffschalen (11, 12) festgelegt ist und damit beide Griffschalen (11, 12) im anderen Längenendbereich zusammenhält.

An die beiden Griffschalen (11, 12) ist jeweils der halbe Querschnitt einer hinterschnittenen Feder (48) (Leiste) angeformt und beide Federhälften ergeben eine im Querschnitt schwalbenschwanzförmige Feder (48), auf die das Schärfteil (6) mit einer schwalbenschwanzförmigen Nut (47) aufgeschoben ist.

Für die zusätzliche Festlegung eines Schwammes (40) ist das Halteprofil (20) mit mehreren angeformten, in den Schwamm (40) eingreifenden Stegen (20a) ausgestattet.

## Patentansprüche

1. Kombinationswerkzeug, insbesondere für Kraftfahrzeuge, mit an einem Griff (1) in einem Längenendbereich angeordnetem Nothammer (4) und im anderen Längenendbereich vorgesehenen Gurtschneider (5), gekennzeichnet durch die Vereinigung nachstehender Merkmale, daß
a) der Griff (1) einen dem Nothammer (4) benachbart angeordneten Eisschaber (2) und/oder eine Abziehleiste (3) aufweist,
b) im Griff (1) dem Gurtschneider (5) benachbart angeordnet ein Wischblattschärfer (6) vorgesehen ist, und
c) im Griff (1) zwischen Nothammer (4) und Gurtschneider (5) sowie Wischblattschärfer (6) ein Finger-Durchgriff (8) ausgeformt ist, welcher an der dem Nothammer (4) zugewandten Griffseite einen Schutzsteg (9) für die Finger bildet.

2. Kombinationswerkzeug nach Anspruch 1, dadurch gekennzeichnet, daß der Griff (1) in einem Längenendbereich eine erste, aus dem Nothammer (4), dem Eisschaber (2), der Abziehleiste (3) und einem Gleit- und/oder Schmiermittelbehälter (7) gebildete Werkzeuggruppe und im anderen Längenendbereich eine zweite, aus dem Gurtschneider (5) und dem Wischblattschärfer (6) bestehende Werkzeuggruppe aufweist und dabei der Nothammer (4) und der Gurtschneider (5) sich an zwei Griffseiten gegenüberliegen.

3. Kombinationswerkzeug nach Anspruch 1 und 2, dadurch gekennzeichnet, daß der Griff (1) von einem langgestreckten, zweischaligen Griffkörper gebildet ist und der Finger-Durchgriff (8) als langgestreckte Ausformung in Griff-Längsrichtung zwischen den beiden Werkzeuggruppen (2, 3, 4, 7/5, 6) verläuft.

4. Kombinationswerkzeug nach einem der Ansprüche 1 bis 3, dadurch gekennzeichnet, daß der Griff (1) auf dem dem Schutzsteg (9) gegenüberliegenden Griffbereich außenseitig eingeformte Griffrinnen (10) für die Finger besitzt.

5. Kombinationswerkzeug nach einem der Ansprüche 1 bis 4, dadurch gekennzeichnet, daß der Griff (1) in einem Längenendbereich einen von einer Verbreiterung gebildeten Werkzeugkopf (15) aufweist, in deren Bereich der Eisschaber (2), die Abziehleiste (3), der Nothammer (4) und der Behälter (7) angeordnet sind und im anderen Längenendbereich hakenartig ausgeführt ist und in diesem Haken (28) an einer Griffseite das Schneidteil (5) und an der gegenüberliegenden Hakenseite das Schärfteil (6) liegen.

6. Kombinationswerkzeug nach einem der Ansprüche 1 bis 5, dadurch gekennzeichnet, daß der Griff (1) aus zwei spiegelbildlich ausgebildeten, mit außenseitig und um den Finger-Durchgriff (8) umlaufenden Falzrändern (13) überlappend ineinandergreifenden und durch innenseitig angeformten, von ineinanderfassenden Hülsen und Steckern gebildeten Clipverschlüssen (14) lösbar zusammengehaltenen Griffschalen (11, 12) gebildet ist, die jeweils einteilig aus Kunststoff oder Leichtmetallguß geformt sind.

7. Kombinationswerkzeug nach einem der Ansprüche 1 bis 6, dadurch gekennzeichnet, daß in den beiden endseitigen Verbreiterungen (15) der beiden Griffschalen (11, 12) zur Bildung des Nothammers (4) ein Schlagbolzen (16) aus Metall eingesetzt ist, der quer, vorzugsweise geneigt zur Längsrichtung des Griffes (1) verläuft und aus der den Schutzsteg (9) zeigenden Griff-Längsseite herausragt.

8. Kombinationswerkzeug nach Anspruch 7, dadurch gekennzeichnet, daß in beiden Griffschalen (11, 12) zur formschlüssigen Aufnahme des Schlagbolzens (16) zusammenpassende Teile einer Einsatzkammer (17) ausgeformt sind, welche einen Kammerboden (17a) und mindestens eine Kammerrippe (17b) aufweist, gegen die und in der der Schlagbolzen (16) mit einer Bolzen-Stirnfläche (16a) und mindestens einer Ringnut (16b) unter Bildung von Schlagbolzen-Anlagestellen anliegt.

9. Kombinationswerkzeug nach Anspruch 8, dadurch gekennzeichnet, daß der Schlagbolzen (16) des Nothammers (4) eine spitze oder plane Schlagfläche (16c) hat und in Längsrichtung um 180 Grad gewendet in seine Einsatzkammer (17) lagefixiert einsetzbar ist.

10. Kombinationswerkzeug nach einem der Ansprüche 1 bis 9, dadurch gekennzeichnet, daß in den beiden Griffschalen (11, 12) koaxial zu der Schlagbolzen-Einsatzkammer (17) zusammenpassende Kammerteile des Behälters (7) zur Aufnahme des Gleit- und/oder Schmiermittels, vorzugsweise Talcum, ausgeformt sind, der an der dem Schlagbolzen (16) gegenüberliegenden Griff-Längsseite eine durch einen Stopfen (18) verschlossene Entnahmeöffnung (7a) zeigt.

11. Kombinationswerkzeug nach einem der Ansprüche 1 bis 10, dadurch gekennzeichnet, daß jede Griffschale (11, 12) an ihrem verbreiterten Werkzeugkopf (15) einen angeformten, über die gesamte Verbreiterungslänge verlaufenden und schräg nach außen gerichteten Anlagesteg (19) aufweisen, beide Anlagestege (19) dem Griff (1) eine trapezförmige Rinne (27) geben, in die ein Halteprofil (20) eingreift und durch mindestens eine in die Griffschalen (11, 12) einfassende Schraube (22) lösbar am Griff (1) gehalten ist , welches zwischen sich und je einem Anlagesteg (19) den Eisschaber (2) und die Abziehleiste (3) auswechselbar hält.

12. Kombinationswerkzeug nach Anspruch 11, dadurch gekennzeichnet, daß der Eisschaber (2) von einer sich über die gesamte Länge des Anlagesteges (19) erstreckenden Metallplatte gebildet ist, die in einer Abstufung (25) am Haltesteg (19) anliegt und mit zwei Fixierlöchern (23) über angeformte Nocken (24) des Anlagesteges (19) greift und lagefixiert zwischen Anlagesteg (19) und Halteprofil (20) festgelegt ist.

13. Kombinationswerkzeug nach Anspruch 12, dadurch gekennzeichnet, daß die Abziehleiste (3) aus einem sich über die gesamte Länge des Anlagesteges (19) erstreckenden, streifenförmigen Gummiprofil mit einer an einer Längskante angeformten Wulst (3a) besteht, wobei die Wulst (3a) in entsprechende Aussparungsrinnen (26) des Anlagesteges (19) und des Halteprofiles (20) zur lagefixierten Festlegung eingreift und die Abziehleiste (3) in einer Abstufung (25) des Anlagesteges (19) liegt.

14. Kombinationswerkzeug nach einem der Ansprüche 1 bis 13, dadurch gekennzeichnet, daß der Haken (28) des Griffstückes (1) sich in Griffbreite und somit in Längsrichtung der gegenüberliegenden Verbreiterung (15) erstreckt, die Hakennase (28a) an einer Längsseite über den Griff (1) hinaus ragt und mit dem Griff (1) einen Einführschlitz (29) bildet, in den eine metallische Messerklinge (30) des Schneidteiles (5) hineinragt, die mit ihrer Längsrichtung schräg zur Längsrichtung des Einführschlitzes (29) unter Bildung einer keilförmigen Schneidkante (30a) steht.

15. Kombinationswerkzeug nach Anspruch 14, dadurch gekennzeichnet, daß die Messerklinge (30) zwischen den beiden Griffschalen (11, 12) durch zwei durch Löcher (30b) der Messerklinge (30) fassende Clipverschlüsse (14) festgelegt ist.

16. Kombinationswerkzeug nach einem der Ansprüche 1 bis 15, dadurch gekennzeichnet, daß das Schärfteil (6) dem Einführschlitz (29) abgewandt im Bogenbereich (28b) des Griffhakens (28) liegt und schräg zum Bogen (28b) verläuft.

17. Kombinationswerkzeug nach Anspruch 16, dadurch gekennzeichnet, daß das Schärfteil (6) von mehreren ausgesparten Abstufungen (31) und einem ausgesparten Schärfkeil (32) gebildet ist, wobei in beiden Griffschalen (11, 12) gleiche Teile an Abstufungen (31) und ein Teil des Schärfkeiles (32) ausgespart sind.

18. Kombinationswerkzeug nach den Ansprüchen 16 und 17, dadurch gekennzeichnet, daß der Schärfkeil (32) in der Mitte liegt und die Abstufungen (31) sich daran anschließen und ein in der Breite sich erweiterndes und nach außen offenes, rinnenartiges Schärfteil (6) bilden.

19. Kombinationswerkzeug nach einem der Ansprüche 16 bis 18, dadurch gekennzeichnet, daß die Oberfläche des Schärfkeiles (32) und der Abstufungen (31) des Schärfteiles (6) von einer Erodierung des Griffschalenwerkstoffes gebildet oder mit einer rauhen, eine Schärfwirkung erzeugenden Beschichtung (33), wie Schmirgelschicht , Metallschicht, od. dgl., versehen sind.

20. Kombinationswerkzeug nach einem der Ansprüche 1 bis 19, dadurch gekennzeichnet, daß der Verschlußstopfen (18) für den Behälter (7) mit einer Düsennadel (34) zum Reinigen und Einstellen der Spritzdüsen der Scheibenwaschanlage ausgestattet ist.

21. Kombinationswerkzeug nach einem der Ansprüche 1 bis 20, dadurch gekennzeichnet, daß der Griff (1) einen verbreiterten Werkzeugkopf (15) in Form einer Finne hat, aus dessen Finnenspitze ein Eisschaber (2) oder eine Abziehleiste (3) herausragt.

22. Kombinationswerkzeug nach einem der Ansprüche 1 bis 21 dadurch gekennzeichnet, daß der Griff (1) aus einem querliegenden, in der Grundform ovalen Handgriff (36) mit Fingerdurchgriff (8) und über einen an dessen Schutzsteg (9) angeformten Verbindungssteg (37) gehaltenen Werkzeugkopf (15) gebildet ist, wobei in dem Handgriff (36) das Schneidteil (5) und/oder das Schärfteil (6) angeordnet sind.

23. Kombinationswerkzeug nach einem der Ansprüche 1 bis 22, dadurch gekennzeichnet, daß der Griff (1) an seinem Werkzeugkopf (15) zwischen dem Eisschaber (2) und der Abziehleiste (3) in einem diese beiden Werkzeuge (2,3) am Griff (1) fixierenden Einsatzstück (39) eine Austrittsnut (38) für das in einem Behälter (7) in dem Einsatzstück (39) oder dem Griff (1), untergebrachte Gleit- oder Schmiermittel und das Schärfteil (6) aufweist.

24. Kombinationswerkzeug nach einem der Ansprüche 1 bis 22, dadurch gekennzeichnet, daß der Griff (1) in seinem Werkzeugkopf (15) neben dem Eisschaber (2) und/oder der Abziehleiste (3) einen aus einem weicheren und einem härteren Bereich (40a, 40b) bestehenden, einstückigen Schwamm (40) aufweist, der in einem im Querschnitt C-förmigen Halteprofil (20) wechselbar und lösbar gehalten ist.

25. Kombinationswerkzeug nach einem der Ansprüche 1 bis 24, dadurch gekennzeichnet, daß an einer Griffschale (11 oder 12) im Bereich des Gleit- und/oder Schmiermittel-Behälters (7) eine von einem Gummi- oder Kunststoffbalg gebildete Pumpe (42) zum Herausblasen des Gleit- und/oder Schmiermittels aus dem Behälter (7) angeordnet ist.

26. Kombinationswerkzeug nach einem der Ansprüche 1 bis 25, dadurch gekennzeichnet, daß das Schärfteil (6) abnehmbar an den Griffschalen (11, 12), vorzugsweise durch Nut-Feder-Verbindung (47, 48) mit hinterschnittenem Querschnitt abschiebbar gehalten ist.

27. Kombinationswerkzeug nach einem der Ansprüche 1 bis 26, dadurch gekennzeichnet, daß beide Griffschalen (11, 12) im Bereich des Eisschabers (2) und der Abziehleiste (3) durch eine an der Griffstückrinne (27) an- und eingeformte Hakenverbindung (46) und durch die Aufschiebeverbindung (47, 48) des Schärfteiles (6) lösbar zusammengehalten sind.

## Claims

1. A combination tool, in particular for motor vehicles, having a handle (1) with an emergency hammer (4) on one longitudal end and on its other longitudal end a safety belt knife (5), characterized by the combination with the following features,
a) the handle (1) comprising an ice scraper and/or a squeegee (3) adjacent to said emergency hammer (4),
b) in the handle (1) a wiper blade sharpener (6) is arranged adjacent to the safety belt knife (5) and
c) in the handle (1) between the emergency hammer (4) and the safety belt knife (5) and the wiper blade sharpener (6) a finger cutout (8) is formed, which is forming a protective bar (9) for fingers on the side of the handle (1) directed to the emergency hammer (4).

2. A combination tool in accordance with claim 1, characterized in that the handle (1) on the one end longitudal section a first groop of tools is arranged consisting of the emergency hammer (4), the ice scraper (2), the squeegee (3) and a container (7) for slip and/or lubricating agents and on the other end longitudal section a second groop of tools is arranged consisting of the safety belt knife (5) and the wiper blade sharpener (6) and thereby the emergency hammer (4) and the safety belt knife (5) are disposed on two oppositee sides of the handle (1).

3. A combination tool in accordance with claim 1 or 2, wherein said handle (1) is formed by an elongated, double-shelled grip body, and said molded finger cutout (8) extends in a longitudinal direction of said handle between said first tool group (2, 3, 4, 7) and said second tool group (5, 6) as a longitudinal mold.

4. A combination tool in accordance with one of claims 1 to 3, characterized in that the handle (1) has, in the handle area opposite the protective bar (9), grip grooves (10) for the fingers, molded on the outside.

5. A combination tool in accordance with one of claims 1 to 4, characterized in that the handle (1) has in a longitudinal end section a tool head (15) formed by a widening, in the area of which the ice scraper (2), the squeegee (3), the emergency hammer (4) and the container (7) are disposed, and that it is hook-shaped in the other longitudinal end section, and that in this hook (28) the knife element (5) lies on one handle side and the sharpening element (7) lies on the opposite hook side.

6. A combination tool in accordance with one of claims 1 to 5, characterized in that the handle (1) is formed of two handle shells (11, 12), each made of one piece of plastic or light cast metal, which are embodied mirror-reversed and have beaded edges (13) extending along the outer edge and around the finger cutout (8), which interlock overlappingly and which are releasably kept together by means of internally molded clip closures (14) formed of interlocking bushes and plugs.

7. A combination tool in accordance with one of claims 1 to 6, characterized in that a striking bolt (16) of metal is inserted in the two widenings (15) at the end of the two handle shells (11, 12) for forming an emergency hammer (4), which extends crosswise, preferably inclined in relation to the longitudinal direction of the handle (1) and extends from the long handle side having the protective bar (9).

8. A combination tool in accordance with claim 7, characterized in that corresponding portions of an insertion chamber (17) are molded in both handle shells (11, 12) for the positive reception of the striking bolt (16) having a chamber bottom (17a) and at least one chamer rib (17b), against and in which the striking bolt (16) abuts with a bolt front surface (16a) and at least one annular groove (16b), forming striking bolt attachment points.

9. A combination tool in accordance with claim 8, characterized in that the striking bolt (16) of the emergency hammer (4) has a pointed or flat striking surface (16c), and that it can be inserted with its position fixed in its insertion chamber (17) turned by 180° in its longitudinal direction.

10. A combination tool in accordance with one of claims 1 to 9, characterized in that in the two handle shells (11, 12) chamber elements of the container (7), fitting together coaxially in relation to the striking bolt inserting chamber (17), are disposed for receiving the slip and/or lubricating agents, preferably talcum powder, having on the long handle side opposite the striking bolt (16) an output opening (7a), which can be closed off by a stopper (18).

11. A combination tool in accordance with one of claims 1 to 10, characterized in that each handle shell (11, 12) has on its widened tool head (15) a molded attachment bar (19), extending over the entire widening length and directed obliquely outward, that both attachment bars (19) provide the handle (1) with a trapeze-shaped groove (27), which is engaged by a fastening section (20) and which is releasably held on the handle (1) by at least one srew (22) engaging the handle shells (11, 12), and which exchangeably maintains the ice scraper (2) and the squeegee (3) between itself and one of the attachment bars (19).

12. A combination tool in accordance with claim 11, characterized in that the ice scraper (2) is formed by a metal plate extending over the entire length of the attachment bar (19) and lying in a step (25) on the attachment bar (19) and extends with two fixing holes (23) across molded tangs (24) of the attachment bar (19) and is fixed in position between the attachment bar (19) and the fastening section (20).

13. A combination tool in accordance with claim 12, characterized in that the squeegee (3) consists of a strip-shaped rubber section extending over the entire length of the attachment bar (19) and has a bead (3a) along one longitudinal edge, where the bead (3a) engages corresponding cut out grooves (26) of the attachment bar (19) and the fastening section (20) for fixing it in place, and that the squeegee (3) lies in a step (25) of the attachment bar (19).

14. A combination tool in accordance with one of claims 1 to 13, characterized in that the hook (28) of the handle (1) extends over the width of the handle and thus in the longitudinal direction of the oppositely located widening (15), and the nose (28a) of the hook extends past the handle (1) on one long side and forms together with the handle (1) an insertion slit (29), into which extends a metallic knife blade (30) of the knife element (5), the longitudinal direction of which extends obliquely to the longitudinal direction of the insesrtion slit (29), forming a wedge-shaped cutting edge (30a).

15. A combination tool in accordance with claim 14, characterized in that the knife blade (30) is fixed between the thwo handle shells (11, 12) by means of two clip closures (14) which extend through two holes (30b) of the knife blade (30).

16. A combination tool in accordance with one of claims 1 to 15, characterized in that the sharpening element (6) extends facing away from the insertion slit (29), in the area of arc (28b) of the handle hook (28) and extends obliquely in relatin to the arc (28b).

17. A combination tool in accordance with claim 16, characterized in that the sparpening element (6) is formed by a plurality of cut out steps (31) and a cut out sharpening wedge (32), where the same amounts of steps (31) and a portion of the sharpening wedge (32) are cut out in both handle shells (11, 12).

18. A combination tool in accordance with claim 16 and 17, characterized in that the sharpening wedge (32) is located in the center and the steps (31) adjoint it and form the groove-like sharpening element (6) which increases in width and is open towards the exterior.

19. A combination tool in accordance with one of claims 16 to 18, characterized in that the surface of the sharpening wedge (32) and the steps (31) are formed by eroding the material of the handle shells or are provided with a rough coating (33) generating a sharpening effect, such as an emery coating, metal coating, or the like.

20. A combination tool in accordance with one of claims 1 to 19, characterized in that the stopper (18) for the container (7) is provided with a nozzle needle (34) for cleaning and adjusting the spray nozzles of the windshield washer installation.

21. A combination tool in accordance with one of claims 1 to 20, characterized in that the handle (1) has a widened tool head (15) in the shape of a fin, from the fin point of which extend an ice scraper (2) or a squeegee (3).

22. A combination tool in accordance with one of claims 1 to 21, characterized in that the handle (1) is formed by a crosswise extending hand grip (36) with an oval basic shape and having a finger cutout (8) and by a tool head (15) fastened on its connecting piece (37) molded on the protective bar (9), where the knife element (5) and/or the sharpening element (6) are disposed in the hand grip (36).

23. A combination tool in accordance with one of claims 1 to 22, characterized in that the handle (1) has on its tool head (15), between the ice scraper (2) and the squeegee (3), an outlet groove (38) in an insertion piece (39) fixing the two tools (2, 3) on the handle (1), for the slip or lubricating agent placed in a container (7) in the insertion piece (39) or the handle (1) and for the sharpening element (6).

24. A combination tool in accordance with one of claims 1 to 22, characterized in that the handle (1) has on its tool head (15), besides the ice scraper (2) and/or the squeegee (3), a one-piece sponge (40) having a softer and a harder area (40a, 40b), which is supported exchangeably and releasably in a fastening section (20) having a cross section in the shape of a C.

25. A combination tool in accordance with one of claims 1 to 24, characterized in that a pump (42), made of a rubber or plastic bellows, for blowing the slip and/or lubricating agent out of the container (7) is disposed on one handle shell (11 or 12) in the area of the slip and/or lubricating agent container (7).

26. A combination tool in accordance with one of claims 1 to 25, characterized in that the sharpening element (6) is maintained releasably on the handle shells (11, 12), preferably by means of a groove and spring connection (47, 48) with an undercut cross section, so it can be pushed off.

27. A combination tool in accordance with one of claims 1 to 26, characterized in that both handle shells (11, 12) are releasably kept together in the area of the ice scraper (2) and the squeegee (3) by means of a hook connection (46) formed on and in the handle groove (27) and by the push-on connection (47, 48) of the sharpening element (6).

## Revendications

1. Outil combiné, particulierement pour véhicules à moteur, avec un marteau de secours (4) disposé à une extrémitè de la longuer du manche (1) et un trancheur de ceinture (5) prévu à l'autre extrémité de la longueur,
se distinguant par la réunion des caractéristiques suivantes:
a) le manche (1) présente une raclette à glace (2) et/ou une réglette de raclage (3) placée(s) au voisinage du marteau de secours (4),
b) dans le manche (1) est prévu un affileur de lame d'essuieglace (6) placé au voisinage du trancheur de ceinture (5), et
c) dans le manche (1), entre le marteau de secours (4) et le trancheur de ceinture (5) ainsi que l'affileur de lame d'essuie-glace (6) se trouve un évidement formant passe-doigt (8), qui forme une ailette/barrette de protection (9) pour les doigts.

2. Outil combiné selon spécification 1, caractérisé par le fait que le manche (1) présente à une extrémité de sa longueur un premier groupe d'outils comprenant le marteau de secours (4), la raclette à glace (2), la réglette de raclage d'humidité (3) et un réservoir à agent antifriction et/ou à lubrifiant (7) et à l'autre extrémité de sa longueur un deuxième groupe d'outils comprenant le trancheur de ceinture (5) et l'affileur de lame d'essuie-glace (6), de sorte que le marteau de secours (4) et le trancheur de ceinture (5) se trouvent à deux côtés opposés du manche.

3. Outil combiné selon spécifications 1 et 2, caractérisé par le fait que le manche (1) est constitué d'un élément allongé à deux coques et que le passage de doigt (8) se découpe dans la longueur du manche entre les deux groupes d'outils (2, 3, 4, 7/5, 6).

4. Outil combiné selon l'une des spécifications 1 à 3, caractérisé par le fait que le manche (1) présente des renfoncements (10) pour la prise des doigts, moulés sur l'extérieur de la partie du manche opposée à la barrette de protection (9).

5. Outil combiné selon l'une des spécifications 1 à 4, caractérisé par le fait que le manche (1) présente à une extrémité un renflement formant tête d'outil (15), au niveau de laquelle sont disposés la raclette à glace (2), la réglette de raclage (3), le marteau de secours (4) et le réservoir (7), l'autre extrémité étant en forme de crochet, ce crochet (28) comportant d'un côté du manche le trancheur (5) et du côté opposé du crochet l'affileur (6).

6. Outil combiné selon l'une des spécifications 1 à 5, caractérisé par le fait que le manche (1) est formé de deux coques (11, 12) symétriques dont les bords repliés (13) courent à l'extérieur et autour du passage de doigt (8), s'emboîtant en se chevauchant et maintenues ensemble de manière amovible par des fermetures clips (14), moulées sur la partie interne, formées de douilles et de fiches s'imbriquant les unes dans les autres, chacune de ces coques étant coulée d'une pièce, en matière plastique ou en alliage léger.

7. Outil combiné selon l'une des spécifications 1 à 6, caractérisé par le fait que dans les deux renflements (15) aux extrémités des deux coques du manche (11, 12) se trouve inséré, pour former le marteau de secours (4), un percuteur (16) en métal qui est logé en travers, de préférence incliné en direction du sens longitudinal du manche (1) et qui dépasse du long côté du manche tourné vers la barrette de protection (9).

8. Outil combiné selon la spécification 7, caractérisé par le fait que dans les deux coques du manche (11, 12), pour accueillir la forme positive du percuteur (16), sont moulées en creux les parties allant ensemble d'une chambre d'insertion (17), présentant un plancher de chambre (17a) et au moins une nervure (17b), contre et dans lesquels le percuteur (16) vient adhérer avec une face de contact (16a) et au moins une rainure pour anneau de retenue (16b) formant des emplacements de contact du percuteur.

9. Outil combiné selon la spécification 8, caractérisé par le fait que le percuteur (16) du marteau de secours (4) a une surface de frappe (16c) pointue ou plane et que, pivoté à 180° dans le sens longitudinal, il s'insère de manière stable dans sa chambre d'insertion (17).

10. Outil combiné selon l'une des spécifications 1 à 9, caractérisé par le fait que, dans les deux coques du manche (11, 12), en position coaxiale par rapport à la chambre d'insertion du percuteur (17), sont moulées en creux les parties allant ensemble du réservoir (7) à agent antifriction et/ou à lubrifiant, de préférence du talc, qui présente sur le côté long du manche opposé au percuteur (16) une ouverture de soutirage (7a) fermée par un bouchon.

11. Outil combiné selon l'une des spécifications 1 à 10, caractérisé par le fait que chaque coque du manche (11, 12) présente sur le renflement formant sa tête d'outil (15) une barrette de fixation (19) moulée courant sur toute la longueur du renflement et orientée de biais vers l'extérieur, ces deux barrettes de fixation (19) dotant le manche (1) d'un sillon (27) de forme trapézoïdale dans lequel s'insère un profil de maintien (20) et étant maintenues au manche (1) de manière amovible par au moins une vis (22) qui s'insère dans les coques du manche (11, 12), ce qui permet d'intervertir et d'échanger avec chacune des barrettes de fixation (19) la raclette à glace (2) et la réglette de raclage (3).

12. Outil combiné selon spécification 11, caractérisé par le fait que la raclette à glace (2) est formée par une plaque de métal s'étendant sur toute la longueur de la barrette de fixation (19), qui adhère dans un dénivellement (25) à la barrette de maintien (19) et s'accroche avec deux trous de fixation (23) aux cames (24) moulées de la barrette de fixation (19) et est placée de manière stable entre la barrette de fixation (19) et le profil de maintien (20).

13. Outil combiné selon spécification 12, caractérisé par le fait que la réglette de raclage (3) est constituée d'une bande de caoutchouc profilée munie d'un bourrelet (3a) modelé sur l'une des arêtes longitudinales et s'étendant sur toute la longueur de la barrette de fixation (19), le bourrelet (3a) s'introduisant dans les rainures évidées (26) correspondantes de la barrette de fixation (19) et du profil de maintien (20) afin d'obtenir un assemblage stable, tandis que la réglette de raclage (3) épouse un dénivellement (25) de la barrette de fixation (19).

14. Outil combiné selon l'une des spécifications 1 à 13, caractérisé par le fait que le crochet (28) du manche (1) s'étend sur la largeur du manche et de la sorte dans le sens de la longueur du renflement (15) qui lui est opposé, que le nez du crochet (28a) dépasse du manche (1) sur l'un des longs côtés et forme avec le manche (1) une rainure pour montage léger (29), dans laquelle s'enfonce une lame métallique de couteau (30) du trancheur (5) dont le côté long est dirigé de biais par rapport au long côté de la rainure pour montage léger (29), formant un tranchant de lame (30a) à chanfrein.

15. Outil combiné selon la spécification 14, caractérisé par le fait que la lame de couteau (30) est fixée entre les deux coques du manche (11, 12) par deux fermetures à clip (14) passant par des trous (30b) de la lame de couteau (30).

16. Outil combiné selon l'une des spécifications 1 à 15, caractérisé par le fait que l'affileur (6) se trouve dans la courbure (28b) du crochet du manche (28), tournant le dos à la rainure pour montage léger (29) et est placé de biais par rapport à cette courbure (28b).

17. Outil combiné selon la spécification 16, caractérisé par le fait que l'affileur (6) est formé de plusieurs évidements en dégradé (31) et d'un chanfrein à affiler (32) en négatif, les deux coques du manche présentant les mêmes évidements en dégradé (31) et une partie évidée du chanfrein à affiler (32).

18. Outil combiné selon les spécifications 16 et 17, caractérisé par le fait que le chanfrein à affiler (32) se trouve au milieu et que les dénivellements (31) s'y rencontrent, formant un affileur (6) à sillons qui va en s'élargissant et en s'ouvrant vers l'extérieur.

19. Outil combiné selon les spécifications 16 à 18, caractérisé par le fait que les surfaces du chanfrein à affiler (32) et les dégradés (31) de l'affileur (6) sont formés par une corrosion du matériau des coques du manche ou revêtus d'une couche (33) rugueuse à effet aiguisant, comme une couche d'émeri, de métal, ou similaire...

20. Outil combiné selon l'une des spécifications 1 à 19, caractérisé par le fait que le bouchon de fermeture (18) pour le réservoir (7) est doté d'un pointeau (34) pour nettoyer et régler les gicleurs des essuie-glace.

21. Outil combiné selon l'une des spécifications 1 à 20, caractérisé par le fait que le manche (1) a une tête d'outil (15) renflée en forme de panne, de la pointe de laquelle dépassent une raclette à glace (2) ou une réglette de raclage (3).

22. Outil combiné selon l'une des spécifications 1 à 21, caractérisé par le fait que le manche (1) est formé d'une poignée (36) transversale de forme de base ovale avec passage de doigt (8) et d'une tête d'outil (15) maintenue à sa barrette de protection (9) par un pont de liaison (37) moulé, le trancheur (5) et/ou l'affileur (6) se trouvant dans la poignée (36).

23. Outil combiné selon l'une des spécifications 1 à 22, caractérisé par le fait que le manche (1) présente à sa tête d'outil (15), entre la raclette à glace (2) et la réglette de raclage (3) dans un de ces deux outils (2, 3) fixant la pièce rapportée (39) au manche (1), une rainure de sortie (38) pour l'agent antifriction ou le lubrifiant contenus dans un réservoir (7) de la pièce rapportée (39) ou du manche (1) et l'affileur (6).

24. Outil combiné selon l'une des spécifications 1 à 22, caractérisé par le fait que le manche (1) présente dans sa tête d'outil (15) à côté de la raclette à glace (2) et/ou de la réglette de raclage (3) une éponge (40) d'une pièce, comportant une partie douce et une partie plus dure (40a, 40b), pouvant être enlevée et changée, et qui est maintenue dans un profil de maintien (20) de forme transversale en C.

25. Outil combiné selon l'une des spécifications 1 à 24, caractérisé par le fait que l'une des coques du manche (11 ou 12) comporte dans le secteur du réservoir (7) d'agent antifriction et/ou de lubrifiant une pompe (42) formée d'un soufflet en caoutchouc ou en matière plastique, destinée à expulser en soufflant l'agent antifriction et/ou le lubrifiant hors du réservoir (7).

26. Outil combiné selon l'une des spécifications 1 à 25, caractérisé par le fait que l'affileur (6) amovible des coques du manche (11, 12) est formé de préférence par un assemblage à languette et rainure (47, 48) avec coupe à contre-dépouille coulissante.

27. Outil combiné selon l'une des spécifications 1 à 26, caractérisé par le fait que les deux coques du manche (11, 12) sont assemblées et maintenues de manière amovible dans la zone de la raclette à glace (2) et de la réglette de raclage (3) par un joint à crochets (46) formé sur et dans le sillon du manche (27) et par le joint coulissant à languette et rainure (47, 48) de l'affileur (6).
